(19) Europäisches Patentamt
European Patent Office
Office européen des brevets

(11) **EP 2 528 290 A1**

(12) **EUROPEAN PATENT APPLICATION**

(43) Date of publication:
   **28.11.2012 Bulletin 2012/48**

(51) Int Cl.:
   *H04L 25/02* (2006.01)     *H04L 5/00* (2006.01)
   *H04B 7/06* (2006.01)

(21) Application number: **11305647.7**

(22) Date of filing: **27.05.2011**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(71) Applicants:
   • **Alcatel Lucent
     75007 Paris (FR)**
   • **Fraunhofer-Gesellschaft zur Förderung der
     angewandten Forschung e.V.
     80686 München (DE)**

(72) Inventors:
   • **Wunder, Gerhard
     10247 Berlin (DE)**
   • **Schreck, Jan
     10967 Berlin (DE)**

(74) Representative: **2SPL Patentanwälte
   Postfach 15 17 23
   80050 München (DE)**

Remarks:
   Amended claims in accordance with Rule 137(2)
   EPC.

(54)     **Feedback information transmission and scheduling in a radio access network**

(57)     A concept for a mobile transceiver apparatus 100 for communicating with a base station transceiver in a mobile communication system, the base station transceiver 200 using multiple antennas for transmitting radio signals to the mobile transceiver apparatus 100. The mobile transceiver apparatus 100 comprises means for estimating 120 a radio channel between the base station transceiver 200 and the mobile transceiver apparatus 100 based on a reference signal to obtain a channel estimate. The mobile transceiver 100 further comprises means for determining 130 feedback information based on the channel estimate, the feedback information comprising information on the quality of the radio channel and reliability information on the information on the quality of the radio channel. The concept provides an according base station transceiver apparatus 200 for communicating with the mobile transceiver 100. The base station transceiver apparatus 200 comprises means for receiving 220 the feedback information from the mobile transceiver 100 and means for determining 230 a reception capacity of the mobile transceiver 100 based on the information on the quality of the radio channel, and means for performing 240 a reliability test on the reception capacity based on the reliability information to obtain a reliability test result. The base station transceiver apparatus 200 comprises means for scheduling 250 the mobile transceiver 100 for transmission based on the reliability test result.

Fig. 3

EP 2 528 290 A1

## Description

Embodiments of the present invention relate to mobile communication networks, more particularly but not exclusively to feedback transmission and scheduling in a radio access network.

Background

Multiple-Input-Multiple-Output (MIMO as abbreviation) transmission has been subject to research and development. Utilizing multiple transmit and receive antennas can allow for enhanced transmission capacity and higher data rates for the users of a mobile communication system. Multi-user MIMO (MU-MIMO as abbreviation) communication systems can enable transmission of data to multiple users on the same radio resources. Linear beamforming techniques are considered as a candidate for future wireless systems to enable MU-MIMO functionalities. Linear beamforming has the potential of achieving close to optimal performance even with partial channel state information at the transmitter (CSIT as abbreviation). Simultaneously, the complexity of the communication system can be kept reasonably small. In future wireless systems, e.g. LTE-advanced (as abbreviation for Long Term Evolution) and IMT-advanced (as abbreviation for International Mobile Telecommunications), the beamforming vectors are likely to be defined by a transmit codebook, i.e. the beamforming vectors are selected from a predetermined set.

To enable efficient communication (partial) CSIT is required at the base station (BS as abbreviation). Since the resources of the feedback link are usually limited and may also be used for uplink data traffic, the amount of feedback information should be kept reasonably and is critical to the uplink performance of the communication system.

Therefore, it has to be carefully considered how such feedback information is designed. More specifically, it is critical which information is fed back and how this information can be determined, since the limited processing resources available in a mobile terminal have to be taken into account as well. Hence, there are multiple technical problems in designing and determining the feedback information. For example, the complexity of the determination should be kept low; since, the feedback information is determined by mobile user equipments (UEs as abbreviation) or mobile terminals. The feedback rate should be kept low; since the feedback information is reported over the uplink channel, which is also used for uplink data traffic, i.e. for uplink payload data, which is therefore limited by the feedback information.

For example, in 3GPP R1-073937, Alcatel-Lucent, "Comparison aspects of fixed and adaptive beamforming for LTE downlink", 3GPP TSG RAN WG1 #50bis Shanghai, China, October 8-12, 2007, the authors propose a method that uses a codebook in a fixed angular ordering. Each user selects its best entry from the codebook in the sense that its own signal power will be maximized. To this approach it will also be referred to as minimum chordal distance (MD as abbreviation) metric approach. The entry of the codebook and a normalization that accounts for achieved power is communicated as channel direction information (CDI as abbreviation) and channel quality information (CQI as abbreviation) to the BS.

Essentially, this method is first suited for a single-user application. If multiple users will be scheduled by the BS on the same radio resource the performance will suffer from interference, in general. It is further proposed to use a beam distance (BD as abbreviation) criterion to reduce interference. However, this does not account for the real channel situation. More generally speaking, the correlation between beams, i.e. entries from the codebook, does not quantify the overall channel to support a multiuser operation mode.

A known approach in terms of system performance is the so called Rate Approximation (RA as abbreviation) feedback strategy, as introduced by Schreck, J.; Jung, P.; Wunder, G.; Ohm, M. & Mayer, H.-P. "Limited Feedback in Multiuser MIMO OFDM Systems Based on Rate Approximation", IEEE GLOBECOM, 2009. The key idea of the RA is to choose the feedback information such that the BS can approximate the per user contributions to the BS sum rate subject to a small uniform error. The performance of the RA was analyzed by Wunder, G.; Schreck, J.; Jung, P.; Huang, H. & Valenzuela, R. "A new Robust Transmission Technique for the Multiuser MIMO Downlink" IEEE ISIT 2010. The analysis shows that with RA feedback huge benefits over conventional methods, as e.g. MD, BD, etc., can be achieved.

For using RA the complexity requirements at the UE are very high, such that RA may be unfeasible to implement in currently widely used UEs. A less complex approach is to use the MD metric to quantize the channels given in a quantization codebook, i.e. a feedback codebook, and then apply these quantized channels at the base station to compute rates and perform scheduling based on these rates. This approach may provide some improvement, but the performance is still very limited.

Summary

Embodiments can be based on the finding that the complexity of a feedback determination involving all beamforming configurations, all users and all possible feedback vectors is too high to be carried out at a mobile transceiver. Furthermore, embodiments can be based on the finding that conventional feedback schemes taking only one user into account, leads to a degraded system performance as the user interactions are not considered in the feedback. When scheduling multiple users based on the individually optimized feedback, severe mutual interference between the scheduled users may degrade the system performance.

Embodiments may be based on a further finding that reliability information on an estimated performance by a mobile transceiver can allow a base station to verify the estimated performance in a very fast manner, i.e. by physical layer signaling. In other words the mobile transceiver may report a certain channel quality, e.g. in terms of a channel feedback vector leading to a supportable data rate, and reliability information which can be used to determine lowest supportable data rate or a worst case data rate.

Therewith, embodiments may achieve high throughput figures for a base station, while having moderate complexity at the mobile transceivers. In other words, in embodiments a mobile transceiver may estimate for a given radio channel their best beamforming and channel vector configuration. Both the beamforming configuration and the channel vector configuration may be determined from predefined codebooks. With the channel estimate being more accurate than the channel vector to be provided as feedback, an error of the effective channel can be determined at the mobile transceiver taking into account the predefined beamforming configurations. This error may be provide as feedback to the base station, enabling the base station to estimate a lower bound for the transmission rate the mobile transceiver can support.

In the following the effective channel is to be understood as the combination of a beamforming configuration and a radio channel configuration. Two different radio channel configurations are distinguished, a channel estimate estimated by a mobile transceiver based on reference signals provided by the base station transceiver and the channel vector, which may be provided as part of feedback information to the base station and which may be provided as index of a codebook. It is to be noted the quantization of the channel vector is coarser that the quantization of the channel estimate. This is due to the higher quantization depth available at the mobile transceiver for local processing than the quantization depth available for uplink transmission of feedback information restricted by the limited bandwidth. Therewith the information on a downlink radio channel being made available at the base station has a certain statistical error.

In embodiments such error in the effective channel may be determined for any channel vector and then optimized, in some embodiments even maximized, by evaluating all beamforming configurations. Hence, for any given channel vector the beamforming configuration may be selected which maximizes the channel error, i.e. the beamforming configuration for which the difference of its combination with the channel estimate and its combination with the channel vector is maximized, or at least a beamforming configuration is selected for which said difference is greater than the minimum difference.

Moreover, in embodiments from the found beamforming-channel vector combinations, the channel vector may then be selected for which the channel error is optimized, in some embodiments even minimized, at least a channel vector may be selected, for which the channel error is less than a maximum channel error among the optimized beamforming-channel vector combinations.

In other words embodiments may first select a beamforming configuration for which the channel error is high. This may take into account the actual channel gain given by the combination of the channel estimate and the beamforming configuration, and it may take into account the channel gain given by the combination of the channel vector and the beamforming configuration. As opposed to prior art concepts, the difference or error may be optimized in embodiments rather than optimizing either one of the two combinations.

Furthermore, as it is known that all other users can also only select from the predefined channel vectors the beamforming configuration can be chosen so as to maximize a difference between a channel gain, provided by a beamforming configuration and the user's actual radio channel, and a channel gain provided by said beamforming configuration and any channel vector from the predetermined set. A beamforming configuration can be selected as to provide a high error, while the channel vector can then be selected for a low error. In some embodiments the beamforming configuration may be selected as to maximize the error and the channel vector can be selected as to minimize the maximized error.

Embodiments can be further based on the finding that such error can also be provided as feedback information, namely as reliability information. The base station can then determine a subset of users to be scheduled based on the feedback and verify the channel quality of the users, i.e. whether they can support a transmission rate according to their feedback, based on the reliability information, i.e. the error. This verification can be carried out by means of physical layer signaling and the base station can therewith quickly verify each user's supportable data rate. As the base station may verify the rates of the users among the users, which were determined to be scheduled at the same time, the verification may be carried out at the same time. Therewith system interactions, i.e. the interference created by simultaneously transmitting signals to the scheduled users, are taken into account and the overall supportable data rate can be verified. In other words, the effect of the overlapping beamforming configurations can be quickly verified such that an overall gain in the sum transmission rate may be obtained. In other embodiments such reliability test may be carried out sequentially among the users, e.g. in order to determine a cheating user which pretends to support a higher data rate than it can actually support. In embodiments, the feedback information can be made reliable, at least a BS can be made aware of how reliable the feedback information is and the BS may run a reliability test. Embodiments may enable a mechanism to detect cheating users.

Embodiments can be based on the finding that an improved system capacity can be obtained when providing reliability information together with feedback information on the radio channel from a mobile transceiver to a base station in a mobile communication system. In other words, it is a finding that the complexity at the mobile transceiver can be kept low, when a certain error tolerance is accepted for the feedback itself. When reliability information on the feedback or an estimate on said error is also provided to the base station transceiver then the base station transceiver can be enabled to approximate the user rates with reduced errors. Embodiments may therefore use a feedback protocol that comprises a feedback metric with reliability information, the reliability information providing a reliability of a channel quality indicated by the feedback information. The feedback metric can be efficiently computed at the mobile transceivers. Furthermore, embodiments may enable efficient feedback of channel state information. Embodiments may therewith utilize a lower complexity at a mobile transceiver while achieving high throughput performance, which conventionally is only possible with more complex processing.

In embodiments, a base station transceiver may accurately approximate the per user rates subj ect to a small uniform error. In embodiments, a base station transceiver may carry out a reliability test, which can be embedded in the physical layer; therewith an embodiment of a base station transceiver may detect cheating mobile transceivers, i.e. mobile transceivers pretending to be able to support higher data rates than actually possible. In other words, in embodiments the feedback information received at a base station from a mobile transceiver may be verified.

Embodiments can provide an apparatus for a mobile transceiver, i.e. embodiments may provide said apparatus to be operated by or included in a mobile transceiver. To the apparatus it will also be referred to as mobile transceiver apparatus in the following. The mobile transceiver can be adapted for communicating with a base station transceiver in a mobile communication system, wherein the base station transceiver uses multiple antennas for transmitting radio signals to the mobile transceiver apparatus. The apparatus comprises means for receiving a reference signal from the base station transceiver. The reference signal may correspond to a number of reference symbols, to a pilot channel, a beam-specific reference in embodiments utilizing beamforming or beam switching, etc. Moreover, the apparatus may comprise means for estimating a radio channel between the base station transceiver and the mobile transceiver apparatus based on the reference signal to obtain a channel estimate. As the base station transceiver utilizes multiple antennas for transmission to the mobile transceiver apparatus the channel estimate may be in vector or matrix form. In some embodiments the apparatus may be adapted for a mobile transceiver having multiple receive antennas, such that a downlink MIMO system is established. In such a case the channel estimate may particularly be in form of a matrix having as many complex valued elements as there are transmit-receive antenna pairs between the base station and the mobile station.

In embodiments the mobile transceiver may use multiple receive antennas. In some embodiments the multiple receive antennas can be utilized for a receive beamforming concept, i.e. the multiple receive signals may be filtered in terms of manipulating their phases, such that they can be coherently combined so to form a combined receive signal with improved signal power, signal-to-noise-ratio, signal-to-noise-and-interference ratio, bit error rate, etc. The combined receive signal may then be used subsequently for the signal processing described herein, e.g. a combined reference signal may be used for obtaining the channel estimate, i.e. a combined channel estimate. In such embodiments, the feedback information may comprise information on the quality of the combined radio channel and reliability information on the information on the quality of the combined radio channel.

In other embodiments the signals of the multiple receive paths may first be processed independently, for example, to obtain a diversity gain from independent radio channels. The reference signals may then be used to estimate each of the independent radio channels. For example, based on the estimates matched filtering in each reception path connected to a receive antenna can be carried out. After matched filtering independent receive signal copies of the same transmit symbol may be obtained and then combined in terms of a maximum ratio combining concept. The combined receive signal may then be improved by diversity gain and the improved signal may then be used for further processing. In other embodiments a selection combining concept may be carried out, i.e. the better one of the two independent receive signal copies may be chosen for further processing. In such embodiments, the feedback information may comprise information on the quality of each of the independent radio channels and reliability information on the information on the quality of each of the independent radio channels. In other embodiments, the diversity gain may be included in the feedback information, i.e. the feedback may be provided based on the combined or effective radio channel. In such embodiments, the feedback information may comprise information on the quality of the combined radio channel and reliability information on the information on the quality of the combined radio channel. For example, in embodiments the transmit vector may be tuned so to optimize only one of the independent receive signal copies, e.g. for a selection combining concept. In other embodiments the transmit vector may be tuned for optimizing both of the independent signal copies, e.g. for a maximum ratio combining concept.

Moreover, the MIMO system established between the multiple transmit and the multiple receive antennas may be used for transmission of multiple data streams which can then be separated using corresponding reception filtering at the mobile transceiver. For the multiple data streams multiple transmit symbols may be transmitted at the same time, such that each of the multiple receive antennas receives signals from each of the multiple transmit antennas, each of the multiple transmit symbols respectively. The radio channel may then be determined according to a complex valued radio channel matrix having independent channel coefficients. One example for establishing a MIMO system having multiple data streams is to use a matrix decomposition on said radio channel matrix, for example eigenvalue or singular value decomposition. The decomposition result, e.g. the eigenvectors or vectors/matrices obtained from the singular value decomposition, can be used to establish the transmit and receive filters, i.e. the components can be used for weighting the signals for the multiple transmit antennas at the base station transceiver and for weighting /combining the multiple receive signals at the mobile transceiver to obtain receive signals for the multiple transmit symbols. Each of the receive signals may then experience an effective radio channel, which includes the actual radio channel and the respective transmit and receive filtering. In such an embodiment the feedback information may comprise information on the quality of each effective radio channel and reliability information on the information on the quality of each effective radio channel. In other words, for each of the multiple data streams, i.e. each of the multiple transmit signals, independent feedback and reliability information may be provided. Moreover, such feedback may be predetermined, for example in term s of a codebook. In other words, as such feedback is reported periodically as the radio channel is time variant, the radio capacity utilized for the feedback transmission should be kept as low as possible. Only a certain data rate is available for the feedback, resulting in only a limited information capacity for each feedback. In some embodiments the feedback may be limited by a predetermined number of bits. Therewith, the feedback is quantized and only a limited number of different feedback vectors are available. The feedback capacity available may be used as an index into a codebook, where the codebook entry may determine the actual more extensive feedback considered at the base station transceiver.

In other words the channel estimate may comprise one complex valued channel coefficient for each transmit-receive-antenna combination. The number of complex valued channel coefficients in the channel estimate may correspond to the product of the number of transmit antennas at the base station and the number of receive antennas at the mobile transceiver apparatus. In some embodiments, the channel estimate may be determined per receive antenna of the mobile transceiver. In this case the channel estimate may correspond to a vector of complex valued channel coefficients, the vector having as many channel coefficients as there are transmit antennas utilized at the base station transceiver.

Moreover, the apparatus for the mobile transceiver may comprise means for determining feedback information based on the channel estimate, the feedback information comprising information on the quality of the radio channel and reliability information on the information on the quality of the radio channel. In embodiments the quality of the radio channel can be determined using different metrics. For example, in embodiments the means for determining the feedback information can be adapted for determining the feedback information comprising information on a quantization error, an attenuation of the radio channel, a signal-to-noise ratio, or a signal-to-noise-and-interference ratio achieved through the radio channel, etc. Such information may be comprised in the feedback information for each channel coefficient, i.e. for each combination of transmit and receive antennas, or, especially when taking MIMO or beamforming into account, the feedback information may relate to a combination of the channel coefficients or to the overall radio channel.

Furthermore, the apparatus comprises means for providing the feedback information for transmission to the base station transceiver. In embodiments the base station transceiver or the mobile transceiver may use beamforming by means of superposition of the signals transmitted through its multiple transmit antennas, received through multiple receive antennas, respectively. Beamforming is to be understood as weighting the signals for the different transmit/ receive antennas so as to generate constructive or destructive superposition of the signals for certain directions based on the wavelength or frequency of the signal as well as the geometry of said antennas. In embodiments the means for determining the feedback information can be adapted for determining the feedback information based on a beamforming configuration at the base station transceiver. In other words, in embodiments multiple beamforming configurations may be used at the base station transceiver. For example, a beamforming configuration may correspond to a predetermined weighting vector for which a certain beamforming or directional characteristic of the transmitted signal is achieved. Different weighting vectors achieving different directional characteristics at the base station transceiver may be available and considered for the feedback information.

In some embodiments there may be a codebook of different predetermined beamforming configurations to be chosen from. The means for determining the feedback information can be adapted for determining the feedback information based on a combination of a set of possible beamforming configurations at the base station transceiver and a set of possible feedback vectors as feedback information. In other words, the actual reception quality at the mobile transceiver may depend on a beamforming configuration used at the base station transceiver and the feedback reported by the mobile transceiver, as this feedback will be taken into account at the base station transceiver for selecting the transmission format and beamforming configuration for the mobile transceiver.

The means for determining the feedback information can be adapted for determining the feedback information based on finding beamforming configurations which maximize a difference of a combination of the channel estimate and the beamforming configuration and a combination of any channel vector and said beamforming configuration, and based on finding a channel vector which minimizes the difference between the combination of the beamforming configuration and the channel estimate, and the combination of the beamforming configuration and the channel vector, wherein the means for determining the feedback information is adapted for determining the reliability information as the minimized difference.

In other embodiments the means for determining can be adapted for finding a beamforming configuration which maximizes a received power of a radio signal received at the mobile transceiver apparatus when transmitted by the base station transceiver. The feedback information may be further based on finding a feedback vector which minimizes a difference between a first estimated reception power or channel gain at the mobile transceiver station, when considering the beamforming configuration and the channel estimate, and a second estimated reception power or channel gain at the mobile transceiver station, when considering the beamforming configuration and said feedback vector. The means for determining the feedback information can be adapted for determining the reliability information as the minimized difference.

The means for receiving can be further adapted for receiving a test transmission from the base station transceiver, wherein the apparatus may further comprise means for decoding a digital signature from the test transmission and wherein the means for providing can be adapted for transmitting the decoded digital signature to the base station transceiver. The means for determining the feedback information can be adapted for determining the reliability information as a difference between a first estimated reception power at the mobile transceiver station, when considering a beamforming configuration and the channel estimate, and a second estimated reception power at the mobile transceiver station, when considering the beamforming configuration and a channel vector.

Embodiments may also provide a mobile transceiver comprising the above described apparatus.

Embodiments may also provide an apparatus for a base station transceiver, to which it can also be referred to as base station transceiver apparatus. The base station transceiver is adapted for communicating with a mobile transceiver in a mobile communication system. The base station transceiver uses multiple antennas for transmitting radio signals to the mobile transceiver. The apparatus comprises means for transmitting a reference signal to the mobile transceiver through a radio channel and means for receiving feedback information from the mobile transceiver. The feedback information comprises information on the quality of the radio channel and reliability information on the information on the quality of the radio channel, as it has already been detailed above. The apparatus comprises means for determining a reception capacity of the mobile transceiver based on the information on the quality of the radio channel. In embodiments the reception quality can for example correspond to a data or transmission rate the mobile transceiver can support or receive. In other words, based on the condition of the radio channel, the interference situation and the noise situation at the mobile transceiver it may be able to support a certain maximum data rate. This maximum data rate may be reflected by the feedback information and it may be further restricted by the system capacities as e.g. the transport formats used. A transport format may for example comprise a certain modulation and coding scheme.

The base station transceiver apparatus further comprises means for performing a reliability test on the reception capacity based on the reliability information to obtain a reliability test result and means for scheduling the mobile transceiver for transmission based on the reliability test result. In some embodiments a mobile transceiver may be scheduled only if the reliability test result is positive. In other embodiments the mobile transceiver may be scheduled with a lower data rate when the reliability test result is negative than when the reliability test is positive. In some embodiments the mobile transceiver may not be scheduled for transmission at all when the reliability test result is negative.

In embodiments the means for determining the reception capacity can be adapted for determining the reception capacity further based on a beamforming configuration from a predetermined set of beamforming configurations. The means for performing the reliability test can be adapted for decreasing the reception capacity based on the reliability information to obtain a decreased reception capacity and for performing a test transmission to the mobile transceiver based on the decreased reception capacity. The means for performing the reliability test can be adapted for receiving a response transmission to the test transmission from the mobile transceiver and for determining the reliability test result by a comparison of the test transmission and the response transmission. In some embodiments a certain test signal can be used to verify the feedback, i.e. a supportable data rate on the respective radio channel. The test transmission may comprise an encoded digital signature and the response transmission may comprise a decoded digital signature. The means for performing the reliability test can then be adapted for comparing the digital signatures and for providing a positive reliability test result when the digital signatures match. Such reliability test may be performed using lower layer signaling only, i.e. only within the physical layer or layer 1 and/or within the MAC-layer (as abbreviation for Medium access control) or layer 2.

Embodiments may provide a method for a mobile transceiver for communicating with a base station transceiver in a mobile communication system, the base station transceiver using multiple antennas for transmitting radio signals to the mobile transceiver apparatus. The method may comprise a step of receiving a reference signal from the base station transceiver and a step of estimating a radio channel between the base station transceiver and the mobile transceiver apparatus based on the reference signal to obtain a channel estimate. The method may further comprise determining feedback information based on the channel estimate, the feedback information comprising information on the quality of the radio channel and reliability information on the information on the quality of the radio channel. The method further comprises providing the feedback information for transmission to the base station transceiver.

Embodiments may further provide a method for a base station transceiver apparatus for communicating with a mobile transceiver in a mobile communication system, the base station transceiver using multiple antennas for transmitting radio signals to the mobile transceiver. The method comprises a step of transmitting a reference signal to the mobile transceiver through a radio channel and a step of receiving feedback information from the mobile transceiver, the feedback information comprising information on the quality of the radio channel and reliability information on the information on the quality of the radio channel. The method further comprises a step of determining a reception capacity of the mobile transceiver based on the information on the quality of the radio channel and performing a reliability test on the reception capacity based on the reliability information to obtain a reliability test result. The method further comprises scheduling the mobile transceiver for transmission based on the reliability test result.

Embodiments may also provide a base station transceiver comprising the above apparatus. Furthermore, embodiments may provide a mobile communication system comprising a mobile transceiver with an above described mobile transceiver apparatus and/or a base station transceiver with an above described base station transceiver apparatus.

Embodiments can further comprise a computer program having a program code for performing one of the above described methods when the computer program is executed on a computer or processor.

Brief description of the Figures

Some other features or aspects will be described using the following non-limiting embodiments of apparatuses and/or methods and/or computer programs by way of example only, and with reference to the accompanying figures, in which

Figure 1a shows an embodiment of an apparatus for a mobile transceiver;

Figure 1b shows an embodiment of an apparatus for a base station transceiver;

Figure 2 illustrates simulated throughput cdfs for different concepts;

Figure 3 illustrates a block diagram of a feedback determination in an embodiment;

Figure 4 depicts a Multi-User MIMO downlink example scenario;

Figure 5 shows simulation results comparing an embodiment to RA and MD;

Figure 6a illustrates a flowchart of an embodiment of a method for a mobile transceiver; and

Figure 6b illustrates a flowchart of an embodiment of a method for a base station transceiver.

Description of some Embodiments

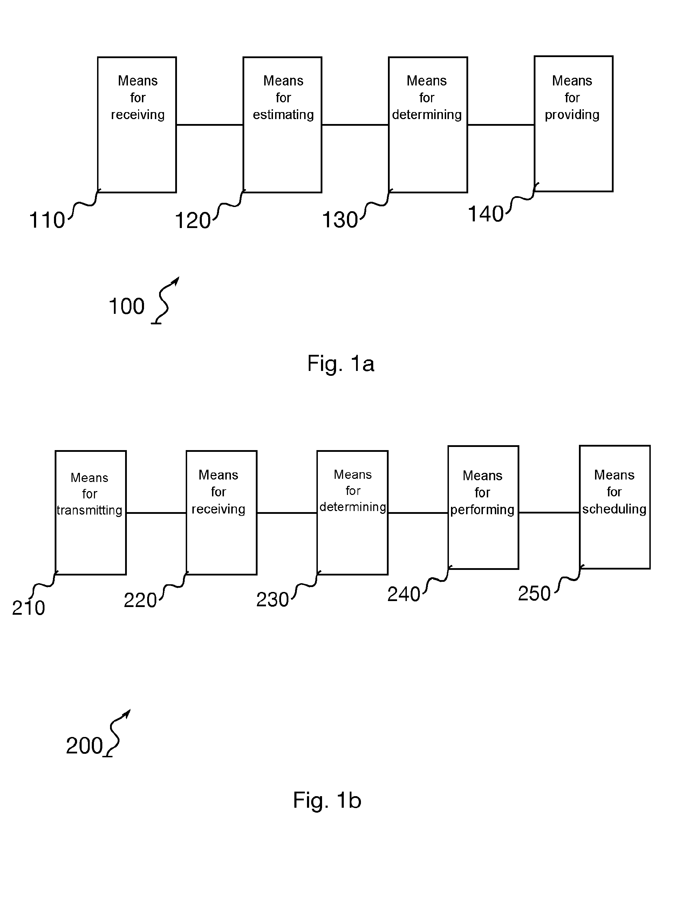

Figure 1a illustrates an embodiment of an apparatus 100 for a mobile transceiver. The mobile transceiver is adapted for communicating with a base station transceiver 200 in a mobile communication system, the base station transceiver 200 using multiple antennas for transmitting radio signals to the mobile transceiver. The mobile transceiver apparatus 100 comprises means for receiving 110 a reference signal from the base station transceiver 200 and means for estimating 120 a radio channel between the base station transceiver 200 and the mobile transceiver apparatus 100 based on the reference signal to obtain a channel estimate. Moreover, the apparatus 100 comprises means for determining 130 feedback information based on the channel estimate, the feedback information comprising information on the quality of the radio channel and reliability information on the information on the quality of the radio channel. The mobile transceiver apparatus further comprises means for providing 140 the feedback information for transmission to the base station transceiver 200.

Figure 1b illustrates an embodiment of an apparatus 200 for a base station transceiver. The base station transceiver is adapted for communicating with a mobile transceiver 100 in a mobile communication system, the base station transceiver apparatus 200 using multiple antennas for transmitting radio signals to the mobile transceiver 100. The apparatus 200 comprises means for transmitting 210 a reference signal to the mobile transceiver 100 through a radio channel and means for receiving 220 feedback information from the mobile transceiver 100, the feedback information comprising information on the quality of the radio channel and reliability information on the information on the quality of the radio channel. The base station transceiver apparatus 200 comprises means for determining 230 a reception capacity of the mobile transceiver 100 based on the information on the quality of the radio channel and means for performing 240 a reliability test on the reception capacity based on the reliability information to obtain a reliability test result. The apparatus 200 comprises means for scheduling 250 the mobile transceiver 100 for transmission based on the reliability test result.

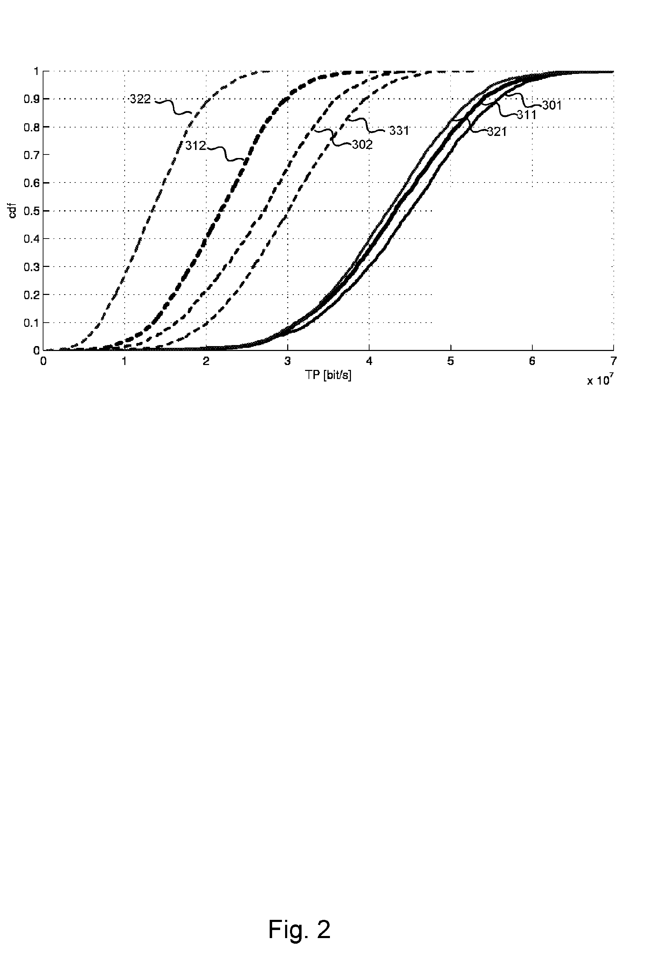

Before a detailed system model is introduced in the following, some performance evaluations are carried out. Figure 2 shows a view chart presenting simulation results of the above mentioned concepts. The concepts are compared by their respective throughput figures, i.e. the amount of data successfully transmitted from a base station transceiver to a mobile transceiver is measured in the simulation and is provided in bit/s.

Figure 2 shows cumulative distribution functions (CDF as abbreviation) of base station transceiver throughputs using greedy scheduling, i.e. maximum rate scheduling. For the simulations two antennas were assumed at the base station and the mobile transceivers were assumed to move with a velocity of 3km/h. The results were obtained by system level simulations using an LTE (as abbreviation for Long Term Evolution as subject to specification by the 3rd Generation Partnership Project standardization body) relevant configuration. Figure 2 shows results for different feedback information, i.e. perfect CSIT (cdfs 301 and 302), RA (cdfs 311 and 312), and the beam distance method as introduced in 3GPP R1-073937 (cdfs 321 and 322). In the view graph dashed lines show performance under link adaption, i.e. selection of modulation and coding scheme (MCS for abbreviation) at the base station transceiver. The cdf 331 shows the results for perfect link adaption, i.e. selection of MCS at the UE (as abbreviation for user equipment). Solid lines show Shannon rates, (i.e. log(1 + SINR), where SINR abbreviates the signal-to-noise-and-inteference ratio.

From the cdfs depicted in Figure 2 superior performance is indicated for the RA. From the Figure it is obvious that RA (311, 312) gives a benefit over BD (as abbreviation for Beam Distance 321, 322), especially under link adaption. This is due to the accurate approximation of user rates at the base station transceiver.

Embodiments may utilize a feedback protocol that comprises a feedback metric as it will be detailed subsequently. The feedback metric can be efficiently computed at the mobile transceivers. Furthermore, efficient feedback of channel state information may be enabled. Embodiments may enable a base station transceiver to accurately approximate the per user rate subject to a small uniform error. In addition, a reliability test can be embedded in the physical layer and or MAC-layer, including tests to detect cheating mobile transceivers.

In an embodiment the feedback information may comprise channel quality indication (CQI as abbreviation) and channel direction indication (CDI as abbreviation) as feedback information on the quality of the radio channel. The feedback information may further comprise a feedback reliability indication as reliability information on the information on the quality of the radio channel.

In embodiments the feedback metric, in the following also referred to as low complexity rate approximation (LCRA as abbreviation) metric, can be given by:

$$d(\boldsymbol{h}_m, \boldsymbol{\nu}) = \max_{\boldsymbol{w} \in \mathcal{C}} \left| \left| \boldsymbol{h}_m^H \boldsymbol{w} \right|^2 - \left| \boldsymbol{\nu}^H \boldsymbol{w} \right|^2 \right|,$$

wherein the radio channel from the considered base station transceiver (BS as abbreviation) to a UE, i.e. the mobile transceiver station, $m$ is $h_m$. The possible feedback vector can be denoted by

$$\boldsymbol{\nu} \in \left\{ \boldsymbol{v}_1, \boldsymbol{v}_2, \ldots, \boldsymbol{v}_{2B} \right\} = \mathcal{V}$$

and a transmit codebook is defined by $C = \{c_1, c_2, ...\}$. Moreover, it is assumed that a beamforming configuration, i.e. a weighting vector is denoted by

$$\boldsymbol{w}$$

In the following it is assumed that the feedback codebook V consists of $2^B$ elements, such that the index of the selected codebook entry can be reported to the BS using $B$ bits. Each UE, say m, may select its element of the feedback codebook by solving:

$$\boldsymbol{\nu}_m = \arg\min_{\boldsymbol{\nu}\in\mathcal{V}} d(\boldsymbol{h}_m, \boldsymbol{\nu}).$$

In other words, the means for determining 130 the feedback information can be adapted for determining the feedback information based on a beamforming configuration w at the base station transceiver 200. The means for determining 130 the feedback information can be adapted for determining the feedback information based on a combination of a set of possible beamforming configurations $C = \{c_1, c_2, ...\}$ at the base station transceiver 200 and a set of possible feedback or channel vectors $v \in \{v_1, v_2,..., v_2B\} = V$ as feedback information.

The means for determining 130 the feedback information can be adapted for determining the feedback information based on first finding beamforming configurations which maximize a difference of a combination of the channel estimate and the beamforming configuration and a combination of any channel vector and said beamforming configuration, i. e.

$$d(\boldsymbol{h}_m, \boldsymbol{\nu}) = \max_{\boldsymbol{w}\in\mathcal{C}} \left| \left|\boldsymbol{h}_m^H \boldsymbol{w}\right|^2 - \left|\boldsymbol{\nu}^H \boldsymbol{w}\right|^2 \right|,$$

and based on secondly finding a channel vector which minimizes the difference between the combination of the beamforming configuration and the channel estimate, and the combination of the beamforming configuration and the channel vector, i.e.

$$\boldsymbol{\nu}_m = \arg\min_{\boldsymbol{\nu}\in\mathcal{V}} d(\boldsymbol{h}_m, \boldsymbol{\nu}),$$

wherein the means for determining the feedback information is adapted for determining the reliability information as the minimized difference.

In other words, in embodiments of the apparatus 100, the means for determining 130 can be adapted for finding a beamforming configuration which maximizes a received power of a radio signal received at the mobile transceiver apparatus 100 and transmitted by the base station transceiver 200. The feedback information can be further based on finding a feedback vector which minimizes a difference between a first estimated reception power at the mobile transceiver station 100, when considering the beamforming configuration and the channel estimate, and a second estimated reception power at the mobile transceiver station 100, when considering the beamforming configuration and the feedback vector, wherein the means for determining 130 the feedback information is adapted for determining the reliability information as the minimized difference, i.e.

$$\boldsymbol{\nu}_m = \arg\min_{\boldsymbol{\nu}\in\mathcal{V}} d(\boldsymbol{h}_m, \boldsymbol{\nu})$$

with

$$d(\boldsymbol{h}_m, \boldsymbol{\nu}) = \max_{\boldsymbol{w}\in\mathcal{C}} \left| \left|\boldsymbol{h}_m^H \boldsymbol{w}\right|^2 - \left|\boldsymbol{\nu}^H \boldsymbol{w}\right|^2 \right|.$$

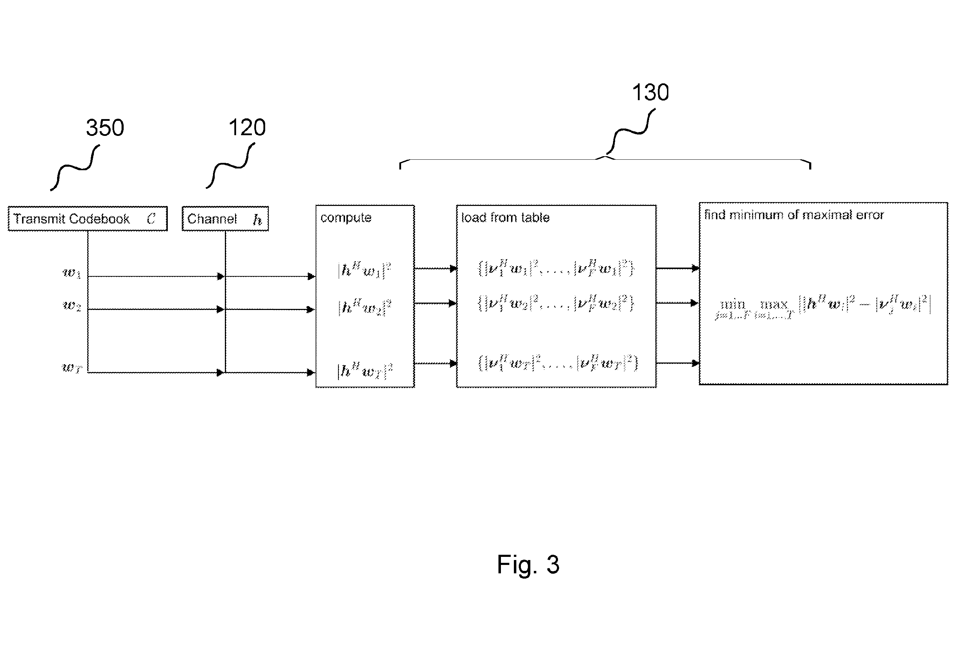

Figure 3 illustrates a block diagram of a feedback determination in an embodiment. In other words, the above described means for determining 130 may use the method as explained with the help of Figure 3. Figure 3 depicts the steps each UE performs to determine its CDI $v_m$ as part of the feedback information. Note, that the inner products $|v^H w|^2$ (for all $v \in v$ and $w \in$ Cs) may not be computed online by the UEs. Instead they can be computed a priori and loaded from the UEs memory. Hence, the UE may only compute $\left| \boldsymbol{h}_m^H \boldsymbol{w} \right|^2$ for all beamforming vectors or configurations $w$ $\in$ C. As can be seen from the transmit codebook 350, as it may be available to the means for determining 130. The beamforming configurations $w \in C$ are available at the apparatus 100. Moreover, the channel estimate is available from the means for estimating 120 such that all $\left| \boldsymbol{h}_m^H \boldsymbol{w} \right|^2$ can be determined by the means for determining 130. The inner products $|v^H w|^2$ can be predetermined and loaded form a stored table. The means for determining 130 may then find

$$\min_{j=1..F} \max_{i=1,...,T} \left| |\boldsymbol{h}^H \boldsymbol{w}_i|^2 - |\boldsymbol{\nu}_j^H \boldsymbol{w}_i|^2 \right| .$$

This corresponds to first finding the beamforming configuration maximizing the error for each of the channel vectors and subsequently finding the channel vector for which said maximized error is minimal. In other embodiments, first a beamforming configuration for each channel vector may be determined for which the above error is greater than a minimum and subsequently out of these combinations the channel vector may selected for which the error is less than the maximum.

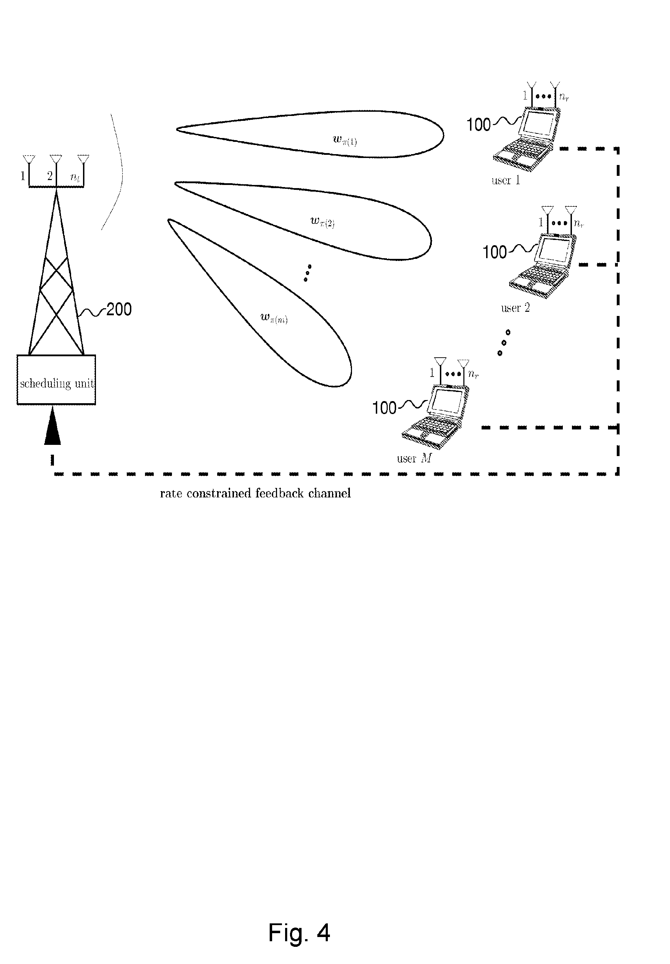

In the following a multiuser MIMO downlink channel of a cellular system is considered, an example scenario of which is illustrated in Figure 4. Figure 4 depicts an embodiment of a base station transceiver apparatus 200 and multiple embodiments of mobile transceiver apparatuses 100, which correspond to different users and are also labeled with "user 1, user 2, ... , user M". The BS is equipped with $n_t$ transmit antennas and each user or mobile transceiver is equipped with $n_r = 1$ receive antenna. In other embodiments the mobile transceiver apparatus 100 may have multiple receive antennas. An extension to multiple receive antennas is possible but not considered here for simplicity of presentation. As it has already been described above, the mobile transceiver may carry out different reception concepts based on its multiple receive antennas. The mobile transceiver may use a reception filter, which can for example combine the receive signals of the multiple receive antennas carrying out reception beamforming. In other embodiments, diversity gain may be exploited, e.g. in terms of selection or maximum ratio combining. In other embodiments, multiple data streams may be transmitted from the base station transceiver to the mobile station, in such embodiments feedback may be provided per data stream, accordingly a transmit vector or beamforming configuration may be provide per data stream.

Moreover, Figure 4 illustrates different beamforming configurations using different weighting vectors

$$\boldsymbol{w}_{\pi(m)} \in \mathcal{C}.$$

The users are collected in the index set $u = \{1,2,....,M\}$.

Moreover, cellular systems are likely to employ multicarrier techniques, e.g. OFDM (as abbreviation for Orthogonal Frequency Division Multiple Access), i.e. a technique that converts the overall system bandwidth in partitions of orthogonal subcarriers. Furthermore, transmission is of course performed over time. In the sequel, it is assumed that a single time-frequency radio resource is utilized for all mobile transceivers or users. For simplicity of representation the time and frequency indices are omitted. Hence, the signal received by user m (on the given time-frequency resource) is:

$$y_m = \hat{\boldsymbol{h}}_m^H \boldsymbol{x} + n_m,$$

with

$$n_m \sim \mathcal{CN}(0, \sigma^2)$$

as additive white Gaussian noise, i.e. as normally distributed random variable with zero mean. The conjugate transpose of a vector a is denoted by $a^H$. The channel from the BS to a user or UE $\hat{h}_m$ is defined as = where $h_m$ is a unit vector (i.e. $\|h_m\|_2 = 1$) and the channel norm is $\mu_m = \|\hat{h}_m\|_2$.

It is further assumed that each user or mobile transceiver apparatus has perfect knowledge of its own channel, i.e. the channel estimate may be perfect. But, due to a rate--constrained feedback channel, the BS has only partial CSIT from each user. Based on the partial CSIT, the BS may select a subset of users $u_s$ and assigns each of these users a beamforming vector or beamforming configuration

$$\boldsymbol{w}_{\pi(m)} \in \mathcal{C}.$$

Where $C$ is the transmit codebook and $\pi: u_s \to C$ defines the mapping of users to beamforming vectors. Hence, in embodiments of the base station transceiver apparatus 200, the means for determining 230 the reception capacity can be adapted for determining the reception capacity further based on the beamforming configuration from a predetermined set of beamforming configurations. The transmitted signal is given by

$$\boldsymbol{x} = \sum_{m \in \mathcal{U}_S} \sqrt{\frac{P}{|\mathcal{U}_S|}} \boldsymbol{w}_{\pi(m)} d_m.$$

Where, the complex information symbol for user $m$ is denoted as

$$d_m \in \mathbb{C}.$$

The power allocation is assumed to be uniform and the transmitted signal satisfies an average sum power constrained, i.e.

$$\mathbb{E}\left[\|\boldsymbol{x}\|_2^2\right] \leq P.$$

In the present embodiment the mapping

$$\pi : \mathcal{U}_S \to \mathcal{C}$$

and the users $u_S$ are chosen such that the system sum rate is maximized. The system sum rate is defined as

$$R(\pi, \boldsymbol{H}) = \sum_{m \in \mathcal{U}_S} r_m(\pi, \lambda_m \cdot \boldsymbol{h}_m).$$

Where the effective channels are defined by the composite matrix

$$\boldsymbol{H} = \left[\lambda_m \boldsymbol{h}_m\right]_{m \in \mathcal{U}_S},$$

with

$$\lambda_m^2 = \frac{P \mu_m^2}{n_t \sigma^2}$$

as the receive SNR of user $m$, which is assumed to be a measurable quantity at UE or mobile transceiver $m$. The per user contributions to the system sum rate are given by

$$r_m(\pi, \lambda_m \cdot \boldsymbol{h}_m) = \log\left(1 + \frac{\lambda_m^2 |\boldsymbol{h}_m^H \boldsymbol{w}_{\pi(m)}|^2}{\frac{|\mathcal{U}_S|}{n_t} + \lambda_m^2 \sum_{l \in \mathcal{U}_S \setminus \{m\}} |\boldsymbol{h}_m^2 \boldsymbol{w}_{\pi(l)}|^2}\right)$$

Note that log(1 + SINR) can be replaced by other performance metrics but it is used here for clarity of representation.

Embodiments can now be used in the above system to determine the feedback information from UE $m$, i.e. the mobile transceiver apparatus 100, to the BS, i.e. the base station transceiver apparatus 200. Having received the feedback information from all, or a subset of, users, the BS can easily find a, at least suboptimal, scheduling decision as will be described below. Each user, say $m$, or embodiment of the mobile transceiver apparatus 100, may report its feedback message by performing the following four steps:

   1. Compute

$$d(\boldsymbol{h}_m, \boldsymbol{\nu})$$

for each $\nu \in v$, which can be carried out by the means for determining 130;
   2. Find the CDI according to

$$\boldsymbol{\nu}_m = \arg\min_{\nu \in \mathcal{V}} d(\boldsymbol{h}_m, \boldsymbol{\nu}),$$

which can be carried out by the means for determining 130;
   3. Compute the CQI according to

$$\vartheta_m^2 = g\left(\boldsymbol{h}_m, \boldsymbol{\nu}\right),$$

which can be carried out by the means for determining 130; and
4. Report the feedback message to the BS, which can be carried out by the means for transmitting 140.

The feedback information may comprise a feedback message, with

a) a) CQI: $\vartheta_m^2$

b) **CDI:**$\nu_m$
c) (Reliability indication) function of rate approximation error: $f\left(d(\boldsymbol{h}_m, \nu_m)\right)$

Note that step i) and ii) are depicted in Figure 3 visualizing the required complexity. In embodiments the means for determining 130 the feedback information can be adapted for determining the feedback information comprising CQI as information on a quantization error, attenuation, a signal-to-noise ratio, or a signal-to-noise-and-interference ratio of the radio channel. An example for the CQI-function is

$$g\left(\boldsymbol{h}_m, \boldsymbol{\nu}\right) = \lambda_m^2 \left|\boldsymbol{h}_m^H \boldsymbol{\nu}\right|^2,$$

which accounts for the receive SNR (as abbreviation for Signal-to-Noise-Ratio) and the quantization error of user $m$. A further alternative for the CQI-function is

$$g\left(\boldsymbol{h}_m, \boldsymbol{\nu}\right) = \frac{\lambda_m^2 \left|\boldsymbol{h}_m^H \boldsymbol{\nu}\right|^2}{1 + \lambda_m^2 \left(1 - \left|\boldsymbol{h}_m^H \boldsymbol{\nu}\right|^2\right)}$$

which accounts for the receive SNR, the quantization error and intra-cell interference, which can be caused by the quantization error.
Embodiments may enable the base station transceiver 200 to perform reliability tests. Such tests may also include finding cheating UEs or mobile transceivers. One example for the procedure is the following. The base station may compute the rate

$$r_m\left(\pi, \vartheta_m \cdot \boldsymbol{\nu}_m\right)$$

for any beamforming vector mapping $\pi$. Then it may send simple digital signature to the user. The digital signature is encoded with a code rate

$$r_m\left(\pi, \vartheta_m \cdot \boldsymbol{\nu}_m\right) - f\left(d(\boldsymbol{h}_m, \boldsymbol{\nu}_m)\right).$$

One example for the function of the rate approximation error is

$$f\left(d(\boldsymbol{h}_m, \boldsymbol{\nu}_m)\right) = \log(1 + \lambda_m^2 d(\boldsymbol{h}_m, \boldsymbol{\nu}_m)).$$

Depending on the scenario and in other embodiments, other functions can be chosen to find a better rate approximation error. In embodiments of the base station transceiver apparatus 200 the means for performing 240 the reliability test can be adapted for decreasing the reception capacity

$$r_m\left(\pi, \vartheta_m \cdot \boldsymbol{\nu}_m\right)$$

based on the reliability information

$$r_m\left(\pi, \vartheta_m \cdot \boldsymbol{\nu}_m\right) - f\left(d(\boldsymbol{h}_m, \boldsymbol{\nu}_m)\right)$$

to obtain a decreased reception capacity and for performing a test transmission to the mobile transceiver 100 based on the decreased reception capacity.

The UE 100 may decode this signature and send it back to the base station 200. I.e. in embodiments of the mobile transceiver apparatus 100, the means for receiving 110 may be further adapted for receiving a test transmission from the base station transceiver 200. The mobile transceiver apparatus 100 may further comprise means for decoding a digital signature from the test transmission. The means for providing 140 can be adapted for transmitting the decoded digital signature to the base station transceiver 200.

If the UE 100 sends back the correct signature the base station 200 will know that the UE 100 can, with high probability, decode the used code rate. In other words in embodiments the means for performing 240 the reliability test can be adapted for receiving a response transmission to the test transmission from the mobile transceiver 100. It can be further adapted for determining the reliability test result by a comparison of the test transmission and the response transmission. The test transmission may comprise an encoded digital signature and the response transmission may comprise a decoded digital signature. The means for performing 240 the reliability test can be adapted for comparing the digital signatures and for providing a positive reliability test result when the digital signatures match.

The task of the scheduling unit or the means for scheduling 250 at the base station transceiver apparatus 200 is to select a subset of users and the corresponding entries from the transmit codebook. It is assumed for the present embodiment that the scheduling objective is maximum sum rate $R(\pi, \boldsymbol{H})$. Other embodiments may utilize other scheduling objectives, particularly fairness criteria may be taken into account as for example in a proportional fair scheduling metric. In embodiments the base station 200 can compute the rates

$$r_m\left(\pi, \vartheta_m \cdot \boldsymbol{\nu}_m\right)$$

and then solve the optimization problem:

$$(\mathcal{U}_S, \pi) = \arg\max_{\substack{\mathcal{S} \subset \mathcal{U} \\ \pi: \mathcal{S} \to \mathcal{C}}} \sum_{m \in \mathcal{S}} r_m(\pi, \vartheta_m \cdot \boldsymbol{\nu}_m) \ .$$

Solving the scheduling problem leads to the set or subset of users, which maximizes the overall transmission rate of the base station transceiver apparatus 200. In other embodiments a subset of users may be scheduled, which at least provides an overall transmission rate, which is higher than each rate a single user could support. In other words, embodiments may not always determine the optimal subset of users to be scheduled, but any suboptimal solution may provide increased transmission rates. Note that finding the scheduling decision is a combinatorial problem, which can be solved efficiently in a greedy fashion.

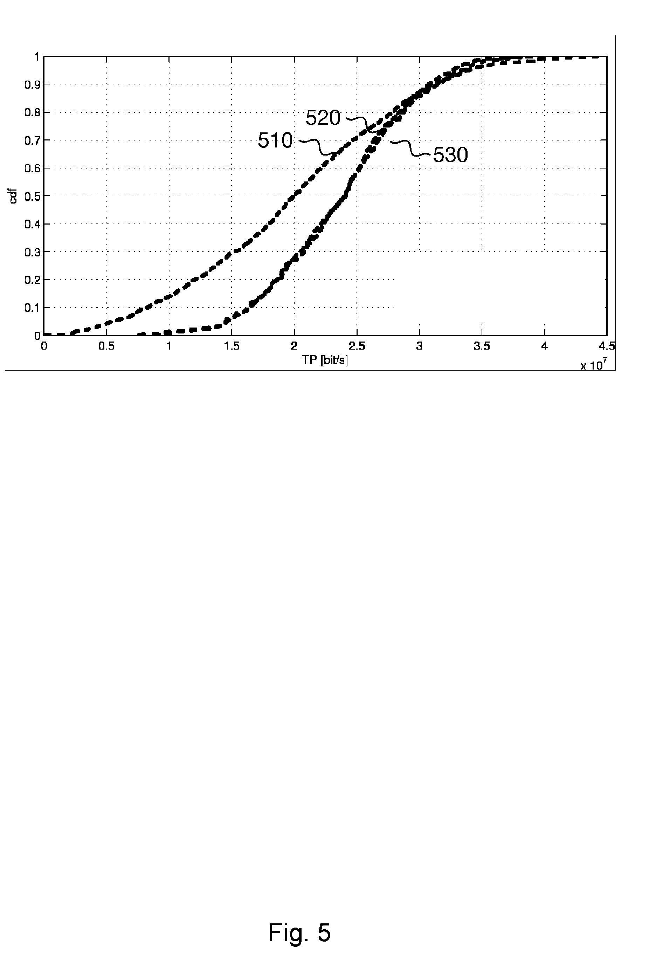

Figure 5 compares the performance of the LCRA metric according to an embodiment, the RA metric and the MD metric all with greedy scheduling. Figure 5 shows a viewgraph of cdfs versus the throughput in bit/s, similar as Figure 2. The cdf 510 corresponds to the minimum chordal distance (MD), cdf 520 corresponds to the embodiment and cdf 530 corresponds to RA. As can be seen from Figure 5 the cdfs of RA and the embodiment almost overlap, i.e. the embodiment achieves a similar performance as RA. Both RA and LCRA outperform the MD concept.

Embodiments may achieve similar performance as RA, however, at a reduced complexity at the mobile transceiver 100, as pointed out by Figure 5. The mobile transceiver does not have to evaluate many combinations of feedback vectors, beamforming configurations and user subsets to determine the feedback information but rather can determine the feedback information according to the above description with reduced complexity.

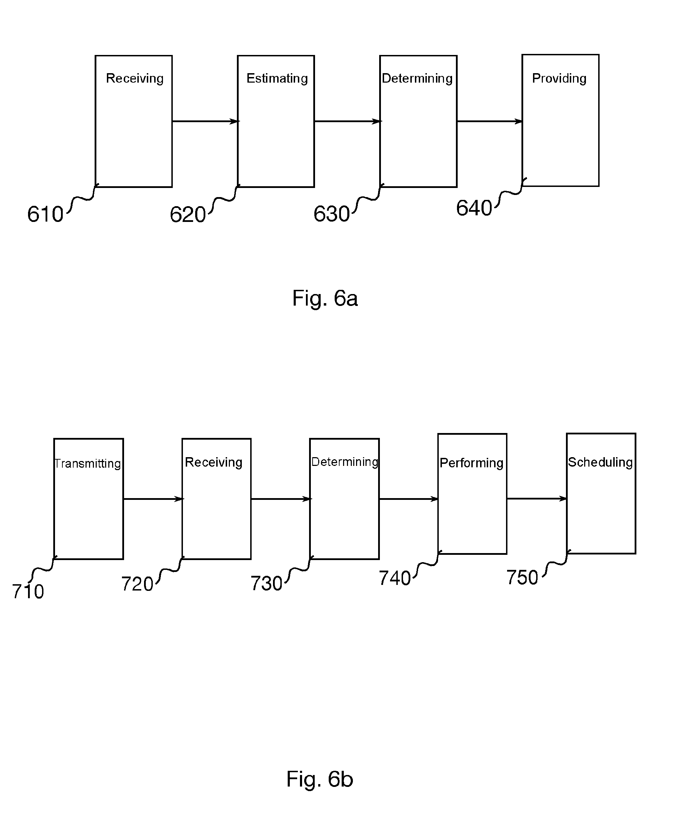

Figure 6a illustrates a flowchart of an embodiment of a method for a mobile transceiver 100. Embodiments may also provide a method for a mobile transceiver apparatus 100 for communicating with a base station transceiver 200 in a mobile communication system. The base station transceiver 200 uses multiple antennas for transmitting radio signals to the mobile transceiver apparatus 100. The method comprises a step of receiving 610 a reference signal from the base station transceiver 200 and a step of estimating 620 a radio channel between the base station transceiver 200 and the mobile transceiver apparatus 100 based on the reference signal to obtain a channel estimate. Furthermore, the method comprises a step of determining 630 feedback information based on the channel estimate, the feedback information comprising information on the quality of the radio channel and reliability information on the information on the quality of the radio channel and a step of providing 640 the feedback information for transmission to the base station transceiver 200.

Figure 6b illustrates a flowchart of an embodiment of a method for a base station transceiver 200. An embodiment may provide a method for a base station transceiver apparatus 200 for communicating with a mobile transceiver 100 in a mobile communication system, the base station transceiver apparatus 200 using multiple antennas for transmitting radio signals to the mobile transceiver 100. The method comprises a step of transmitting 710 a reference signal to the mobile transceiver 100 through a radio channel and a step of receiving 720 feedback information from the mobile transceiver 100, the feedback information comprising information on the quality of the radio channel and reliability information on the information on the quality of the radio channel. The method further comprises a step of determining 730 a reception capacity of the mobile transceiver 100 based on the information on the quality of the radio channel and a step of performing 740 a reliability test on the reception capacity based on the reliability information to obtain a reliability test result. Furthermore, the method comprises a step of scheduling 750 the mobile transceiver 100 for transmission based on the reliability test result.

Embodiments may also provide a mobile transceiver comprising the apparatus 100 according to the above description and/or a base station transceiver comprising the apparatus 200 according to the above description. Furthermore, embodiments may provide a mobile communication system, comprising a mobile transceiver with an apparatus 100 according to the above description and/or a base station with an apparatus 200 according to the above description.

Moreover, embodiments may provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for estimating", "means for determining", "means for transmitting, "means for performing", "means for scheduling", may be provided through the use of dedicated hardware, such as "a receiver", "an estimator", "a determiner", "a transmitter", "a performer or a processor", "a scheduler", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (100) for a mobile transceiver, the mobile transceiver being adapted for communicating with a base station transceiver (200) in a mobile communication system, the base station transceiver (200) using multiple antennas for transmitting radio signals to the mobile transceiver apparatus (100), the apparatus (100) comprising means for receiving (110) a reference signal from the base station transceiver (200);
means for estimating (120) a radio channel between the base station transceiver (200) and the mobile transceiver apparatus (100) based on the reference signal to obtain a channel estimate;
means for determining (130) feedback information based on the channel estimate, the feedback information comprising information on the quality of the radio channel and reliability information on the information on the quality of the radio channel; and
means for providing (140) the feedback information for transmission to the base station transceiver (200).

2. The apparatus (100) of claim 1, wherein the means for determining (130) the feedback information is adapted for determining the feedback information comprising information on a quantization error, attenuation, a signal-to-noise ratio, or a signal-to-noise-and-interference ratio of the radio channel.

3. The apparatus (100) of claim 2, wherein the means for determining (130) the feedback information is adapted for determining the feedback information based on a combination of a set of possible beamforming configurations at the base station transceiver (200) and a set of possible feedback vectors as feedback information.

4. The apparatus (100) of claim 3, wherein the means for determining (130) the feedback information is adapted for determining the feedback information based on finding beamforming configurations which maximize a difference of a combination of the channel estimate and the beamforming configuration and a combination of any channel vector and said beamforming configuration, and based on finding a channel vector which minimizes the difference between the combination of the beamforming configuration and the channel estimate, and the combination of the beamforming configuration and the channel vector, wherein the means for determining the feedback information is adapted for determining the reliability information as the minimized difference.

5. The apparatus (100) of claim 1, wherein the means for receiving (110) is further adapted for receiving a test transmission from the base station transceiver (200), wherein the mobile transceiver apparatus (100) further comprises means for decoding a digital signature from the test transmission and wherein the means for transmitting (140) is adapted for transmitting the decoded digital signature to the base station transceiver (200).

6. An apparatus (200) for a base station transceiver for communicating with a mobile transceiver (100) in a mobile communication system, the base station transceiver apparatus (200) using multiple antennas for transmitting radio signals to the mobile transceiver (100), the apparatus (200) comprising

means for transmitting (210) a reference signal to the mobile transceiver (100) through a radio channel;

means for receiving (220) feedback information from the mobile transceiver (100), the feedback information comprising information on the quality of the radio channel and reliability information on the information on the quality of the radio channel;

means for determining (230) a reception capacity of the mobile transceiver (100) based on the information on the quality of the radio channel;

means for performing (240) a reliability test on the reception capacity based on the reliability information to obtain a reliability test result; and

means for scheduling (250) the mobile transceiver (100) for transmission based on the reliability test result.

7. The apparatus (200) of claim 6, wherein the means for determining (230) the reception capacity is adapted for determining the reception capacity further based on a beamforming configuration from a predetermined set of beamforming configurations.

8. The apparatus (200) of claim 6, wherein the means for performing (240) the reliability test is adapted for decreasing the reception capacity based on the reliability information to obtain a decreased reception capacity and for performing a test transmission to the mobile transceiver (100) based on the decreased reception capacity.

9. The apparatus (200) of claim 8, wherein the means for performing (240) the reliability test is adapted for receiving a response transmission to the test transmission from the mobile transceiver (100) and for determining the reliability test result by a comparison of the test transmission and the response transmission.

10. The apparatus (200) of claim 9, wherein the test transmission comprises an encoded digital signature and the response transmission comprises a decoded digital signature and wherein the means for performing (240) the reliability test is adapted for comparing the digital signatures and for providing a positive reliability test result when the digital signatures match.

11. A mobile transceiver comprising the apparatus (100) of claim 1 and/or a base station transceiver comprising the apparatus (200) of claim 6.

12. A mobile communication system, comprising a mobile transceiver with an apparatus according to claim1 and/or a base station with an apparatus (200) according to claim 6.

13. A method for a mobile transceiver apparatus (100) for communicating with a base station transceiver in a mobile communication system, the base station transceiver (200) using multiple antennas for transmitting radio signals to the mobile transceiver apparatus (100), the method comprising receiving (610) a reference signal from the base station transceiver (200); estimating (620) a radio channel between the base station transceiver (200) and the mobile transceiver apparatus (100) based on the reference signal to obtain a channel estimate;

determining (630) feedback information based on the channel estimate, the feedback information comprising information on the quality of the radio channel and reliability information on the information on the quality of the radio channel; and

providing (640) the feedback information for transmission to the base station transceiver.

14. A method for a base station transceiver apparatus (200) for communicating with a mobile transceiver (100) in a mobile communication system, the base station transceiver apparatus (200) using multiple antennas for transmitting radio signals to the mobile transceiver (100), the method comprising

transmitting (710) a reference signal to the mobile transceiver (100) through a radio channel;

receiving (720) feedback information from the mobile transceiver (100), the feedback information comprising information on the quality of the radio channel and reliability information on the information on the quality of the radio channel;

determining (730) a reception capacity of the mobile transceiver (100) based on the information on the quality of the radio channel;

performing (740) a reliability test on the reception capacity based on the reliability information to obtain a reliability test result; and

scheduling (750) the mobile transceiver (100) for transmission based on the reliability test result.

15. A computer program having a program code for performing one of the methods of claims 13 or 14, when the computer program is executed on a computer or processor.

**Amended claims in accordance with Rule 137(2) EPC.**

**1.** An apparatus (100) for a mobile transceiver, the mobile transceiver being adapted for communicating with a base station transceiver (200) in a mobile communication system, the base station transceiver (200) using multiple antennas for transmitting radio signals to the mobile transceiver apparatus (100), the apparatus (100) comprising means for receiving (110) a reference signal from the base station transceiver (200);
means for estimating (120) a radio channel between the base station transceiver (200) and the mobile transceiver apparatus (100) based on the reference signal to obtain a channel estimate;
means for determining (130) feedback information based on the channel estimate, the feedback information comprising information on the quality of the radio channel and reliability information on the information on the quality of the radio channel, wherein the feedback information is based on a combination of a set of possible beamforming configurations at the base station transceiver (200) and a set of possible feedback vectors; and
means for providing (140) the feedback information for transmission to the base station transceiver (200).

**2.** The apparatus (100) of claim 1, wherein the means for determining (130) the feedback information is adapted for determining the feedback information comprising information on a quantization error, attenuation, a signal-to-noise ratio, or a signal-to-noise-and-interference ratio of the radio channel.

**3.** The apparatus (100) of claim 1, wherein the means for determining (130) the feedback information is adapted for determining the feedback information based on finding beamforming configurations which maximize a difference of a combination of the channel estimate and the beamforming configuration and a combination of any channel vector and said beamforming configuration, and based on finding a channel vector which minimizes the difference between the combination of the beamforming configuration and the channel estimate, and the combination of the beamforming configuration and the channel vector, wherein the means for determining the feedback information is adapted for determining the reliability information as the minimized difference.

**4.** The apparatus (100) of claim 1, wherein the means for receiving (110) is further adapted for receiving a test transmission from the base station transceiver (200), wherein the mobile transceiver apparatus (100) further comprises means for decoding a digital signature from the test transmission and wherein the means for transmitting (140) is adapted for transmitting the decoded digital signature to the base station transceiver (200).

**5.** An apparatus (200) for a base station transceiver for communicating with a mobile transceiver (100) in a mobile communication system, the base station transceiver apparatus (200) using multiple antennas for transmitting radio signals to the mobile transceiver (100), the apparatus (200) comprising
means for transmitting (210) a reference signal to the mobile transceiver (100) through a radio channel;
means for receiving (220) feedback information from the mobile transceiver (100), the feedback information comprising information on the quality of the radio channel and reliability information on the information on the quality of the radio channel, wherein the feedback information is based on a combination of a set of possible beamforming configurations at the base station transceiver (200) and a set of possible feedback vectors;
means for determining (230) a reception capacity of the mobile transceiver (100) based on the information on the quality of the radio channel;
means for performing (240) a reliability test on the reception capacity based on the reliability information to obtain a reliability test result; and
means for scheduling (250) the mobile transceiver (100) for transmission based on the reliability test result.

**6.** The apparatus (200) of claim 5, wherein the means for determining (230) the reception capacity is adapted for determining the reception capacity further based on a beamforming configuration from a predetermined set of beamforming configurations.

**7.** The apparatus (200) of claim 5, wherein the means for performing (240) the reliability test is adapted for decreasing the reception capacity based on the reliability information to obtain a decreased reception capacity and for performing a test transmission to the mobile transceiver (100) based on the decreased reception capacity.

**8.** The apparatus (200) of claim 7, wherein the means for performing (240) the reliability test is adapted for receiving a response transmission to the test transmission from the mobile transceiver (100) and for determining the reliability test result by a comparison of the test transmission and the response transmission.

**9.** The apparatus (200) of claim 8, wherein the test transmission comprises an encoded digital signature and the response transmission comprises a decoded digital signature and wherein the means for performing (240) the reliability test is adapted for comparing the digital signatures and for providing a positive reliability test result when the digital signatures match.

**10.** A mobile transceiver comprising the apparatus (100) of claim 1 and/or a base station transceiver comprising the apparatus (200) of claim 5.

**11.** A mobile communication system, comprising a mobile transceiver with an apparatus (100) according to claim 1 or a base station with an apparatus (200) according to claim 5.

**12.** A method for a mobile transceiver apparatus (100) for communicating with a base station transceiver in a mobile communication system, the base station transceiver (200) using multiple antennas for transmitting radio signals to the mobile transceiver apparatus (100), the method comprising
receiving (610) a reference signal from the base station transceiver (200);
estimating (620) a radio channel between the base station transceiver (200) and the mobile transceiver apparatus (100) based on the reference signal to obtain a channel estimate;
determining (630) feedback information based on the channel estimate, the feedback information comprising information on the quality of the radio channel and reliability information on the information on the quality of the radio channel, wherein the feedback information is based on a combination of a set of possible beamforming configurations at the base station transceiver (200) and a set of possible feedback vectors; and
providing (640) the feedback information for transmission to the base station transceiver.

**13.** A method for a base station transceiver apparatus (200) for communicating with a mobile transceiver (100) in a mobile communication system, the base station transceiver apparatus (200) using multiple antennas for transmitting radio signals to the mobile transceiver (100), the method comprising
transmitting (710) a reference signal to the mobile transceiver (100) through a radio channel;
receiving (720) feedback information from the mobile transceiver (100), the feedback information comprising information on the quality of the radio channel and reliability information on the information on the quality of the radio channel, wherein the feedback information is based on a combination of a set of possible beamforming configurations at the base station transceiver (200) and a set of possible feedback vectors;
determining (730) a reception capacity of the mobile transceiver (100) based on the information on the quality of the radio channel;
performing (740) a reliability test on the reception capacity based on the reliability information to obtain a reliability test result; and
scheduling (750) the mobile transceiver (100) for transmission based on the reliability test result.

**14.** A computer program having a program code for performing one of the methods of claims 12 or 13, when the computer program is executed on a computer or processor.

```
┌──────────┐   ┌──────────┐   ┌──────────┐   ┌──────────┐
│  Means   │   │  Means   │   │  Means   │   │  Means   │
│   for    │   │   for    │   │   for    │   │   for    │
│receiving │   │estimating│   │determining│  │providing │
│          │   │          │   │          │   │          │
└──────────┘   └──────────┘   └──────────┘   └──────────┘
   110            120            130            140
```

100

Fig. 1a

```
┌──────────┐ ┌──────────┐ ┌──────────┐ ┌──────────┐ ┌──────────┐
│  Means   │ │  Means   │ │  Means   │ │  Means   │ │  Means   │
│   for    │ │   for    │ │   for    │ │   for    │ │   for    │
│transmitting││receiving │ │determining││performing│ │scheduling│
│          │ │          │ │          │ │          │ │          │
└──────────┘ └──────────┘ └──────────┘ └──────────┘ └──────────┘
   210         220          230          240          250
```

200

Fig. 1b

Fig. 2

Fig. 3

Fig. 4

Fig. 5

| Receiving | | Estimating | | Determining | | Providing |
|---|---|---|---|---|---|---|
| 610 | | 620 | | 630 | | 640 |

Fig. 6a

| Transmitting | | Receiving | | Determining | | Performing | | Scheduling |
|---|---|---|---|---|---|---|---|---|
| 710 | | 720 | | 730 | | 740 | | 750 |

Fig. 6b

**Europäisches Patentamt**
**European Patent Office**
**Office européen des brevets**

# EUROPEAN SEARCH REPORT

Application Number

EP 11 30 5647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 187 533 A1 (ALCATEL LUCENT [FR]) 19 May 2010 (2010-05-19) | 1,2, 11-13,15 | INV. H04L25/02 |
| Y | * paragraph [0006] * <br> * paragraph [0020] * <br> * paragraph [0028] * <br> * eq. (27); <br> paragraph [0036] * <br> * paragraph [0040] - paragraph [0042] * | 3,5-7, 11,12, 14,15 | H04L5/00 H04B7/06 |
| X | US 2007/280116 A1 (WANG CHENG [HK] ET AL) 6 December 2007 (2007-12-06) <br> * paragraph [0029] * <br> * eq. (15); <br> paragraph [0040] - paragraph [0045] * <br> * paragraph [0058] - paragraph [0060] * <br> * paragraph [0045] - paragraph [0000] * | 1,11-13, 15 | |
| Y | US 2006/056501 A1 (SHINOI KENICHIRO [JP] ET AL) 16 March 2006 (2006-03-16) <br> * paragraph [0013] * | 5-7,11, 12,14,15 | |
| Y,D | SCHRECK J ET AL: "Limited Feedback in Multiuser MIMO OFDM Systems Based on Rate Approximation", GLOBAL TELECOMMUNICATIONS CONFERENCE, 2009. GLOBECOM 2009. IEEE, IEEE, PISCATAWAY, NJ, USA, 30 November 2009 (2009-11-30), pages 1-6, XP031646401, ISBN: 978-1-4244-4148-8 <br> * Sect. III-B * | 3 | TECHNICAL FIELDS SEARCHED (IPC) <br><br> H04L <br> H04B |

-/--

The present search report has been drawn up for all claims

| Place of search | Date of completion of the search | Examiner |
|---|---|---|
| The Hague | 18 November 2011 | Colzi, Enrico |

EP 2 528 290 A1

Europäisches
Patentamt

European
Patent Office

Office européen
des brevets

**EUROPEAN SEARCH REPORT**

Application Number

EP 11 30 5647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 357 767 A1 (RESEARCH IN MOTION LTD [CA]) 17 August 2011 (2011-08-17)<br>* abstract *<br>* paragraph [0016] *<br>* paragraph [0022] *<br>* paragraph [0032] - paragraph [0035] *<br>* paragraph [0066] *<br>----- | 1-3, 11-13,15 | |
| A | US 2011/032839 A1 (CHEN RUNHUA [US] ET AL) 10 February 2011 (2011-02-10)<br>* paragraph [0007] *<br>* paragraph [0097] *<br>* paragraph [0105] *<br>----- | 1,2, 11-13,15 | |

TECHNICAL FIELDS
SEARCHED      (IPC)

The present search report has been drawn up for all claims

| Place of search | Date of completion of the search | Examiner |
|---|---|---|
| The Hague | 18 November 2011 | Colzi, Enrico |

**ANNEX TO THE EUROPEAN SEARCH REPORT
ON EUROPEAN PATENT APPLICATION NO.**

EP 11 30 5647

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2011

| Patent document cited in search report | | Publication date | Patent family member(s) | | Publication date |
|---|---|---|---|---|---|
| EP 2187533 | A1 | 19-05-2010 | CN | 101378277 A | 04-03-2009 |
| | | | EP | 2187533 A1 | 19-05-2010 |
| | | | JP | 2010537598 A | 02-12-2010 |
| | | | KR | 20100057879 A | 01-06-2010 |
| | | | US | 2010306613 A1 | 02-12-2010 |
| | | | WO | 2009030102 A1 | 12-03-2009 |
| US 2007280116 | A1 | 06-12-2007 | NONE | | |
| US 2006056501 | A1 | 16-03-2006 | AT | 460023 T | 15-03-2010 |
| | | | AU | 2003289055 A1 | 13-08-2004 |
| | | | CN | 1742454 A | 01-03-2006 |
| | | | EP | 1587233 A1 | 19-10-2005 |
| | | | JP | 3847766 B2 | 22-11-2006 |
| | | | KR | 20050094448 A | 27-09-2005 |
| | | | US | 2006056501 A1 | 16-03-2006 |
| | | | WO | 2004066547 A1 | 05-08-2004 |
| EP 2357767 | A1 | 17-08-2011 | EP | 2357767 A1 | 17-08-2011 |
| | | | WO | 2011100822 A1 | 25-08-2011 |
| US 2011032839 | A1 | 10-02-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHRECK, J. ; JUNG, P. ; WUNDER, G. ; OHM, M. ; MAYER, H.-P.** Limited Feedback in Multiuser MIMO OFDM Systems Based on Rate Approximation. *IEEE GLOBECOM,* 2009

- **WUNDER, G. ; SCHRECK, J. ; JUNG, P. ; HUANG, H. ; VALENZUELA, R.** A new Robust Transmission Technique for the Multiuser MIMO Downlink. *IEEE ISIT,* 2010